# EUROPÄISCHE PATENTANMELDUNG

(11) **EP 1 820 400 A2**
(43) Veröffentlichungstag der Anmeldung: **22.08.2007**
(21) Anmeldenummer: 07102677.7
(22) Anmeldetag: 20.02.2007
(51) Int. Cl.: A21B 3/07

(54) **Beschickungsvorrichtung**

(30) Priorität: 20.02.2006 DE 102006008153
(71) Anmelder: MIWE Michael Wenz GmbH, 97450 Arnstein (DE)
(72) Erfinder: BAUMEISTER, Ottmar, 97450, Büchold (DE); Brust, Marco, MIWE Michael Wenz GmbH, 97459 Büchold (DE)
(74) Vertreter: Patentanwälte Freischem

(57) **Zusammenfassung**

Die Erfindung betrifft eine Vorrichtung zum Be- und Entladen eines Ofens oder Herdes (7) mit
- einem verschiebbaren Beschickungstisch (4),
- einem Fördertuch (9), welches die Oberseite des Beschickungstisches (4) bildet, um mindestens eine Umlenkkante (10) des Beschickungstisches (4) herum geführt ist und welches antreibbar ist. Der Antrieb des Fördertuchs (9) (auch Band genannt) erfolgt insbesondere motorisch.

Aufgabe der Erfindung ist es, eine bei einer derartigen Vorrichtung eine Sicherung gegen Herunterfallen der der Backwaren gut zu integrieren.

Diese Aufgabe wird erfindungsgemäß dadurch gelöst, daß die eingangs erwähnte Vorrichtung zusätzlich folgendes aufweist:
- ein bewegliches Rückhalteelement (16), das in eine Rückhalteposition bewegbar ist, in der es ein Herunterfallen von auf dem Fördertuch (6) befindlichen Gegen-ständen über die Umlenkkante (10) des Beschickungstisches (4) behindert, wobei der Beschickungstisch (4) zwei zueinander parallele Seitenwangen (8) aufweist und das Rückhalteelement (16) an den Seitenwangen (8) des Beschickungstisches (4) angeordnet ist.

## Beschreibung

### Technisches Gebiet

Die Erfindung betrifft eine Vorrichtung zum Be- und Entladen eines Ofens oder Herdes mit
- einem verschiebbaren Beschickungstisch,
- einem Fördertuch, welches die Oberseite des Beschickungstisches bildet, um mindestens eine Umlenkkante des Beschickungstisches herum geführt ist und welches antreibbar ist.

### Stand der Technik

Derartige Vorrichtungen werden von der Anmelderin unter der Bezeichnung "athlet" vertrieben. Dabei handelt es sich um eine automatische Beschickungsanlage, welche durch eine Steuerungselektronik derart gesteuert ist, daß mehrere (z.B. zwei bis zwölf und mehr) Herde eines Etagenbackofens mit Teiglingen automatisch und zuverlässig beschickt und nach der vorgegebenen Backzeit entleert werden. Die Beschickungsanlage besteht aus dem längs verschiebbaren Beschickungstisch, dessen Oberseite von dem Fördertuch (auch als Band bezeichnet) gebildet wird. Teiglinge werden auf das Fördertuch aufgelegt und der gesamte Beschickungstisch mit dem Tuch und den darauf liegenden Teiglingen in den Ofen eingeschoben. Beim Zurückziehen des Tisches wird das Tuch in die Gegenrichtung angetrieben, so daß die Teiglinge durch das Tuch über die Umlenkkante des Tisches auf die Auflagefläche des Herdes aufgelegt werden. Der Antrieb des Fördertuchs erfolgt in der Regel motorisch, kann aber auch händisch erfolgen.

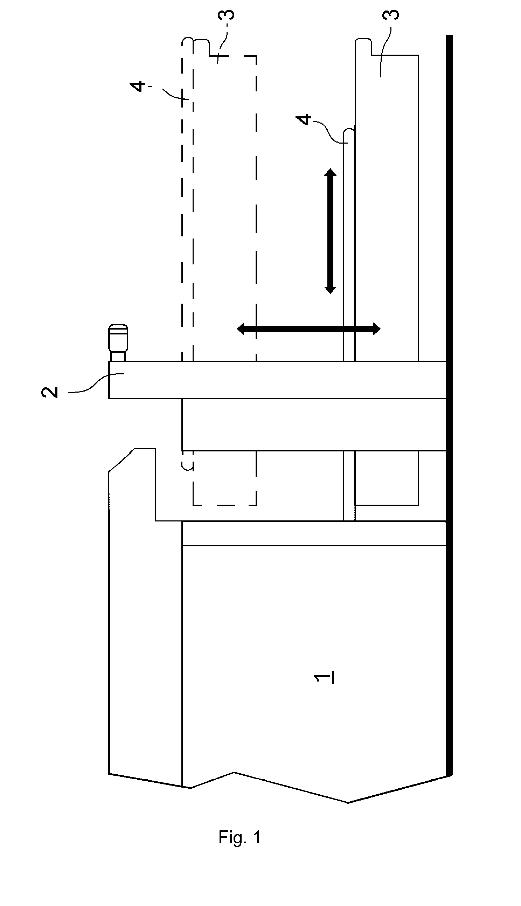

Die Figur 1 zeigt eine derartige Anlage. In der linken Hälfte der Abbildung ist schematisch ein Etagenbackofen 1 dargestellt. Vor dem Etagenbackofen 1 ist ein stabiler Hubrahmen 2, auch Portal genannt, angeordnet, welcher in der Höhe verschiebbar ein Traggestell 3 trägt. Das Portal 2 kann quer zum Backofen 1 verschoben werden, so daß es für die Beschickung mehrerer nebeneinanderstehender Backöfen geeignet ist. Auf dem Traggestell 3 ist ein als verschiebbarer Schlitten ausgebildeter Beschickungstisch 4 angeordnet. Der Beschickungstisch 4 ist in die verschiedenen Herde des Etagenbackofens 1 einschiebbar und wieder herausziehbar. Die Fig. 1 zeigt in der unteren Position in durchgezogenen Linien das Traggestell 3 mit teilweise in den Etagenofen 1 eingeschobenem Beschickungstisch 4. In gestrichelten Linien ist oben an dem Hubrahmen 2 das Traggestell 3 mit vollständig aus dem Etagenofen 1 herausgezogenem Beschickungstisch 4 dargestellt.

Eine derartige Vorrichtung ist zum Beispiel in der EPO 591 670 B1 beschrieben.

Neben dem Ablegen von Teiglingen in den Ofen dient der verschiebbare Beschickungstisch 4 (Schlitten) ebenfalls dem Aufnehmen von in dem Ofen befindlichen Backwaren zur Entnahme. Dieser Vorgang wird in der Fachsprache auch "Aufkrabbeln" genannt. Bei diesem Vorgang wird der Beschickungstisch 4 in den Herd des Etagenofens eingeschoben, wobei die vordere Umlenkkante (auch Messerkante genannt) des Beschickungstisches, um die das Fördertuch geführt ist, im wesentlichen über die Oberfläche der Herdplatte geschoben wird. Gleichzeitig wird der auf der Oberseite des Beschickungstisches befindliche Abschnitt des Fördertuchs entgegen der Einschieberichtung nach hinten gezogen. Wenn die vordere Umlenkkante des Beschickungstisches eine Backware berührt, schiebt sich das Fördertuch unter die Backware und zieht diese von der vorderen Umlenkkante nach hinten auf den Beschickungstisch. Auf diese Weise ist sichergestellt, daß die fertigen Backwaren auf den Beschickungstisch aufgenommen werden und nicht durch die Umlenkkante lediglich über die Herdplatte in den hinteren Bereich des Ofens verschoben werden.

Am Ende des Verschiebeweges des Beschickungstisches befindet sich die Umlenkkante nahe der Rückwand des Herdes. Der Beschickungstisch wird dann wieder zurückgezogen, um die Backwaren auf dem Beschickungstisch aus dem Herd herauszubewegen.

Bei den bisherigen Vorrichtungen war das Problem zu beobachten, daß Backwaren während des Zurückziehens des Beschickungstisches über die Umlenkkante wieder nach unten fallen und im Herd verbleiben. Dies ist insbesondere bei kleinen und runden Backwaren wie Brötchen der Fall.

Wenn diese Backwaren im Herd verbleiben, werden sie überhitzt und verkohlen mit der Zeit. Hierdurch ist die Qualität aller nachfolgenden Chargen, mit denen der Ofen beladen wird, gefährdet. Das manuelle Entfernen der in dem Herd verbliebenen Backwaren mit einem Schieber ist aufwendig und gefährlich. Insbesondere wenn die Backwaren in einem der oberen Herde eines Etagenbackofens verbleiben, ist eine Leiter erforderlich, damit der Bäcker in der Höhe des Herdes arbeiten kann. Bei dem Entfernen der Backwaren aus dem oft über 2 m tiefen Herd mit einem Schieber besteht eine erhebliche Verbrennungsgefahr.

Aus der Druckschrift DE 74 12 622 ist eine Ausbackvorrichtung ohne Fördertuch bekannt. Hier wird ein Tragrahmen, der durch einen Boden vollständig geschlossen ist, in den Ofen eingeschoben und aus dem Ofen ausgezogen, um in dem Ofen befindliche Backwaren aufzunehmen. Eine schwenkbare Schurre oder ein sich über die Breite der freien Aufnahmekante erstreckender Bügel bilden hier ein Rückhalteelement, das die auf dem Boden aufgenommenen Backwaren gegen Herunterfallen sichert.

### Darstellung der Erfindung

Aufgabe der Erfindung ist es, eine Vorrichtung der eingangs genannten Art mit Fördertuch zu schaffen, in die eine Sicherung gegen Herunterfallen der der Backwaren gut integriert ist.

Die Erfindung schlägt hierfür eine Vorrichtung zum Be- und Entladen eines Ofens oder Herdes vor, mit
- einem verschiebbaren Beschickungstisch,
- einem Fördertuch, welches die Oberseite des Beschickungstisches bildet, um mindestens eine Umlenkkante des Beschickungstisches herum geführt ist und welches antreibbar ist, und
- einem zwischen einer ersten und einer zweiten Position beweglichen Rückhalteelement, von denen eine Position eine Rückhalteposition ist, in der das Rückhalteelement ein Herunterfallen von auf dem Fördertuch befindlichen Gegenständen über die Umlenkkante des Beschickungstisches verhindert,
wobei der Beschickungstisch zwei zueinander parallele Seitenwangen aufweist und das Rückhalteelement an den Seitenwangen des Beschickungstisches angeordnet ist.

Dadurch, daß ein bewegliches Rückhalteelement, auch Abdeckung genannt, in eine Rückhalteposition bewegbar ist, in der es auf dem Fördertuch befindliche Gegenstände am Herunterfallen von dem Fördertuch hindert, ist sichergestellt, daß keine Backwaren ungewollt im Herd oder Ofen verbleiben. Das Rückhalteelement ist beweglich, so daß es aus seiner Rückhalteposition herausbewegt werden kann, wenn Backwaren beim Aufkrabbeln über die Umlenkkante auf das Fördertuch aufgenommen werden oder wenn die Backwaren beim Einbringen in den Herd über die Umlenkkante abgelegt werden.

Die Abdeckung ist in den Bereich bewegbar, der an die Umlenkkante des Beschickungstisches angrenzt. Mit anderen Worten ist eine bewegliche Abdeckung vorgesehen, die in den Bereich vor und über der Umlenkkante bewegt werden kann, um ein Herunterfallen von Backwaren zu verhindern. Die Abdeckung kann von der Umlenkkante wieder wegbewegt werden, wenn dieser Bereich freibleiben muß, um Backwaren aufzukrabbeln oder auf die Herdplatte aufzulegen.

Die Abdeckung kann bei einer bevorzugten Ausführungsform als Abdeckleiste ausgebildet sein. Die Abdeckung, insbesondere eine derartige Abdeckleiste, ist zwischen zwei Seitenwangen angeordnet und geführt, welche an den in Verschieberichtung des Beschickungstisches verlaufenden Seitenrändern vorgesehen sind. Die Abdeckleiste ist vorzugsweise zwischen einer ersten Position im oberen Bereich der Seitenwange, in der sie zur Ebene des Beschickungstisches parallel verläuft, und einer zweiten Position nahe der Umlenkkante beweglich. Die zweite Position bildet die Rückhalteposition, wobei die Abdeckleiste sich nahe der Umlenkkante im wesentlichen rechtwinklig zur Oberfläche des Beschickungstisches erstreckt.

Die Seitenwangen und die Abdeckleiste umrahmen in der ersten Position der Abdeckleiste gemeinsam mit der Umlenkkante im wesentlichen den Querschnitt des Herdes, so daß beim Ablegen von Backwaren und beim Aufnehmen von Backwaren der Herdquerschnitt nicht versperrt wird. In der Rückhalteposition erstreckt sich die Abdeckleiste ausgehend von der Umlenkkante über eine Höhe von mehreren Zentimetern, so daß ein Herunterfallen von Backwaren wie Brötchen zuverlässig vermieden wird. Bei einer üblichen Breite des Beschickungstisches (zwischen 0,6 m und 2 m und breiter) läßt sich eine derartige Abdeckleiste mit der erforderlichen Stabilität aus herkömmlichen Metallen wie Aluminium oder Stahl herstellen.

Damit die Abdeckleiste in den oberen Bereich des Querschnitts des Herdes bewegt werden kann, wenn sie nicht benötigt wird, ist es erforderlich, daß die Höhe der Seitenwangen im wesentlichen der Höhe des durch die Vorrichtung zu be- und entladenden Ofens oder Herdes entspricht. Wenn der Backofen Herde mit verschiedener Höhe aufweist, ist die Höhe der Seitenwange im wesentlichen gleich der Höhe des niedrigsten Herdes, wobei die Herdtüren der anderen Herde geeignete Vorrichtungen aufweisen, die ein vollständiges Öffnen der Herdtüren sicherstellen.

Vorzugsweise sind an den einander gegenüberliegenden Oberflächen der Seitenwangen Führungen angeordnet, welche die Abdeckung im vorderen Randbereich des Beschickungstisches, d.h. in dem Bereich oberhalb der Umlenkkante des Beschickungstisches, führt. Wie erwähnt, sollten sich die Führungen von dem oberen Rand der Seitenwangen bis in die Nähe der Umlenkkante erstrecken. Während der Beschickungstisch in den Ofen eingeschoben wird, um Backwaren aufzukrabbeln, befindet sich die Abdeckung im Bereich des oberen Randes der Seitenwange und damit im oberen Randbereich des Herdquerschnitts. Sobald alle Backwaren aufgenommen sind, wird die Abdeckung in die Nähe der Umlenkkante bewegt, wo sie den vorderen Randbereich des Beschickungstisches vertikal verdeckt. So ist sichergestellt, daß auf dem Fördertuch befindliche Backwaren nicht herunterrollen.

Vorzugsweise schließt sich an jede Führung für die Abdeckung in einer Seitenwange eine Aufnahme für ein Kopplungsmittel an. Das Kopplungsmittel verbindet die Abdeckung mit einem Antrieb. Als Kopplungsmittel kann ein Schub/Zuglied, wie z.B. eine Kette verwendet werden. Der Antrieb sollte im hinteren Bereich des Beschickungstisches angeordnet sein, der nicht oder nicht tief in den Ofen oder den Herd eingeschoben wird. Auf diese Weise wird eine Beschädigung des Antriebs durch die hohe Temperatur im Herd oder Ofen vermieden. Die Kette überträgt die Bewegung des Antriebs über die Länge des Beschickungstisches und stellt sicher, daß die Abdeckung nach dem Aufnehmen der Backwaren und vor dem Herausziehen des Beschickungstisches aus dem Herd in die Rückhalteposition bewegt wird, um das Herunterfallen von Backwaren zu verhindern.

Beliebige Antriebsmittel, wie beispielsweise Elektromotoren, Antriebszylinder etc. können zum Bewegen der Abdeckung verwendet werden. Insbesondere hat sich ein Pneumatikzylinder für die Betätigung der Kette und der mit der Kette verbundenen Abdeckung bewährt.

### Kurze Beschreibung der Zeichnungen

Ausführungsformen der Erfindung werden nachfolgend unter Bezugnahme auf die beigefügten Zeichnungen beschrieben. Die Zeichnungen zeigen in:
- Fig. 1: einen Etagenbackofen mit einer Beschickungsvorrichtung gemäß dem Stand der Technik;
- Fig. 2: eine geschnittene Darstellung der erfindungsgemäßen Vorrichtung während des Aufkrabbelns;
- Fig. 3: die Ausführungsform aus Fig. 2 mit ihrer Abdeckung in Rückhalteposition.

### Weg(e) zur Ausführung der Erfindung

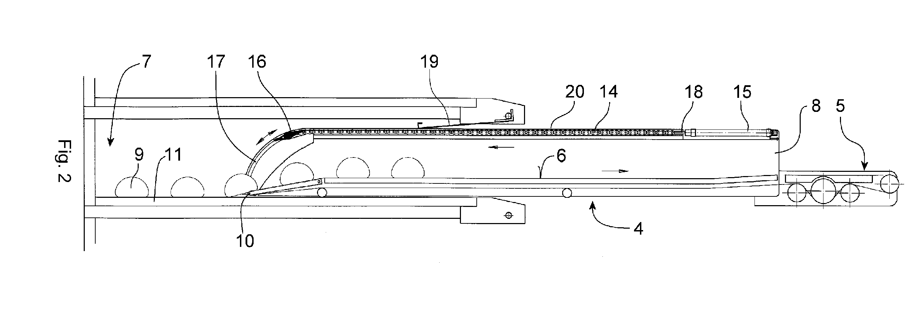

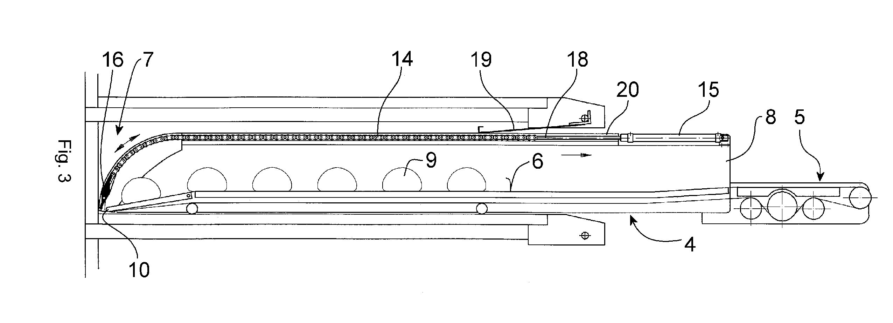

Der in den den Figuren 2 und 3 dargestellte Beschickungstisch 4 ist, wie in der schematischen Darstellung in Fig. 1 erkennbar und wie weiter oben beschrieben, auf einem Traggestell verschiebbar angeordnet. Das Traggestell ist vorzugsweise an einem Hubrahmen in der Höhe verstellbar gehalten, so daß es auf die Höhe eines Herdes eines Etagenbackofens verfahren werden kann. Der Hubrahmen kann vorzugsweise auch quer zu der Vorderseite des Etagenbackofens verschoben werden, so daß durch die Beschickungsvorrichtung mehrere benachbarte Etagenbacköfen beschickt werden können. In den Figuren 2 und 3 ist jeweils nur der Beschickungstisch 4 mit einem Herd 7, nicht aber der Hubrahmen mit dem Traggestell dargestellt.

Die Ausführungsform in den Fig. 2 und 3 zeigt den Tuchantrieb 5 für das Fördertuch 6 des Beschickungstisches 4. Der Beschickungstisch 4 befindet sich in Fig. 2 zur Hälfte innerhalb des Herdes 7. Der Beschickungstisch 4 weist zwei Seitenwangen 8 auf, von denen in der geschnittenen Darstellung in Fig. 2 und 3 jeweils nur eine zu erkennen ist. Die Seitenwange 8 dient dem Öffnen und Offenhalten der Herdtür 19 während des Einschiebens des Beschickungstisches 4 in den Herd 7.

In Fig. 2 ist der Beschickungstisch 4 während des Aufkrabbelns der in dem Herd befindlichen Backwaren 9 gezeigt. Während dieses Aufkrabbelns liegt die vordere Umlenkkante 10 des Beschickungstisches 4 im wesentlichen flach auf der Herdplatte 11 auf. Der Beschickungstisch 4 wird in Einschubrichtung (oberer Pfeil in Fig. 2) in den Herd eingeschoben. Gleichzeitig wird das die Oberfläche des Beschickungstisches 4 bildende Transporttuch 6 in die entgegengesetzte Richtung zurückgezogen (unterer Pfeil in Fig. 2), so daß es die Backwaren 9 aus dem Herd 7 aufnimmt.

Die Seitenwangen 8 des Beschickungstisches 4 tragen über den größten Teil ihrer Länge ein Profil 20, welches eine hohle Aufnahme für eine Schub/Zugkette bildet. Am hinteren Ende des Beschickungstisches 4 ist die Kette 14 mit der Kolbenstange 18 eines Pneumatikzylinders 15 verbunden. Am vorderen Ende des Beschickungstisches 4 ist die Kette 14 mit einer Abdeckleiste 16 verbunden, die sich quer über die gesamte Breite des Beschickungstisches 4 erstreckt. Die Breite des Beschickungstisches 4 und damit die Länge der Abdeckleiste 16 liegt meist zwischen 1 m und 2 m. Die Abdeckleiste 16 kann aus Edelstahl gefertigt sein.

In der in Fig. 2 dargestellten Stellung befindet sich die Abdeckleiste 16 im Bereich des oberen Randes der Seitenwange 8. Die Abdeckleiste 16 deckt somit kaum den Querschnitt des Herdes 7 ab. Dadurch wird die Zufuhr und die Entnahme von Backwaren ermöglicht, die weitgehend über den gesamten Querschnitt des Herdes 7 verteilt sind.

Nachdem der Beschickungstisch 4 in den Herd 7 eingeschoben ist und sämtliche Backwaren auf dem Fördertuch 6 des Beschickungstisches 4 aufliegen, wird der Pneumatikzylinder 15 betätigt und schiebt die Kette 14 nach vorne, so daß die Abdeckung 16, welche in Führungsnuten 17 in den einander gegenüberliegenden Oberflächen der Seitenwangen 8 geführt ist, in die Rückhalteposition (siehe Fig. 3) bewegt wird. In der Rückhalteposition ragt die Abdeckung 16 von der Umlenkkante 10 aus nach oben. In dieser Position ist durch die Abdeckung (Abdeckleiste 16) sichergestellt, daß die Backwaren 9 auf dem Fördertuch nicht über die Umlenkkante 10 zurück in den Herd 7 fallen.

Nachdem der Beschickungstisch 4 aus dem Herd 7 herausgezogen worden ist, wird die Kolbenstange 18 wieder zurück in den Pneumatikzylinder 15 gezogen, so daß die Abdeckleiste 16 in die in Fig. 2 erkennbare Position bewegt wird und den vorderen Querschnitt des Beschickungstisches freigibt.

Bezugszeichenliste:
1 Etagenbackofen
2 Hubrahmen, Portal
3 Traggestell für den Beschickungstisch
4 Beschickungstisch
5 Tuchantrieb
6 Fördertuch (Band)
7 Herd
8 Seitenwange
9 Backware
10 Umlenkkante
11 Herdplatte
14 Kette, Kopplungsmittel
15 Pneumatikzylinder, Antrieb
16 Rückhalteelement, Abdeckleiste
17 Führungsnut
18 Kolbenstange
19 Herdtür
20 Profil, Aufnahme für Kette

## Patentansprüche

1. Vorrichtung zum Be- und Entladen eines Ofens oder Herdes (7) mit
- einem verschiebbaren Beschickungstisch (4),
- einem Fördertuch (6), welches die Oberseite des Beschickungstisches (4) bildet, um mindestens eine Umlenkkante (10) des Beschickungstisches (4) herum geführt ist und welches antreibbar ist,
- einem von einer ersten in eine zweite Position beweglichen Rückhalteelement (16), wobei eine der Positionen eine Rückhalteposition ist, in der das Rückhalteelement (16) ein Herunterfallen von auf dem Fördertuch (6) befindlichen Gegen-ständen über die Umlenkkante (10) des Beschickungstisches (4) behindert,
wobei der Beschickungstisch (4) zwei zueinander parallele Seitenwangen (8) aufweist und das Rückhalteelement (16) an den Seitenwangen (8) des Beschickungstisches (4) angeordnet ist.

2. Vorrichtung nach Anspruch 1, **dadurch gekennzeichnet, daß** das Rückhalteelement eine Abdeckleiste (16) ist.

3. Vorrichtung nach Anspruch 1 oder 2, **dadurch gekennzeichnet, daß** die Höhe der Seitenwangen (8) im wesentlichen gleich der Höhe des durch die Vorrichtung zu be- und entladenden Ofens oder Herdes (7) ist.

4. Vorrichtung nach einem der vorangehenden Ansprüche, **dadurch gekennzeichnet, daß** die einander gegenüberliegenden Oberflächen der Seitenwangen (8) Führungen (17) für das Rückhalteelement (16) in dem an die Umlenkkante (10) des Beschickungstisches (4) angrenzenden Bereich aufweisen, wobei die Führungen (17) sich von dem oberen Rand der Seitenwangen (8) bis in die Nähe der Umlenkkante (10) erstrecken.

5. Vorrichtung nach Anspruch 4, **dadurch gekennzeichnet, daß** sich an jede Führung (17) für das Rückhalteelement (16) in einer Seitenwange (8) eine Aufnahme (20) für ein Kopplungsmittel (14) anschließt, welches das Rückhalteelement (16) mit einem Antrieb (15) verbindet.

6. Vorrichtung nach Anspruch 5, **dadurch gekennzeichnet, daß** das Kopplungsmittel eine Kette (14) ist.

7. Vorrichtung nach Anspruch 5 oder 6, **dadurch gekennzeichnet, daß** der Antrieb an dem der Umlenkkante (10) gegenüberliegenden Ende des Beschickungstisches (4) angeordnet ist.

8. Vorrichtung nach Anspruch 7, **dadurch gekennzeichnet, daß** der Antrieb ein Antriebszylinder (15) ist.
